## Europäisches Patentamt
## European Patent Office
## Office européen des brevets

(11) Veröffentlichungsnummer: **0 192 837**
**A2**

(12) # EUROPÄISCHE PATENTANMELDUNG

(21) Anmeldenummer: 85115585.3

(22) Anmeldetag: 07.12.85

(51) Int. Cl.⁴: **B 29 C 51/42**
**B 29 C 51/10**

(30) Priorität: 20.02.85 DE 3505828

(43) Veröffentlichungstag der Anmeldung:
03.09.86 Patentblatt 86/36

(84) Benannte Vertragsstaaten:
AT BE CH FR GB IT LI LU NL SE

(71) Anmelder: J. H. Benecke GmbH
Beneckeallee 40
D-3000 Hannover 21(DE)

(72) Erfinder: Mente, Kurt
Jürgenweg 6
D-3000 Hannover 1(DE)

(74) Vertreter: Thömen, Uwe, Dipl.-Ing.
Patentanwalt U. Thömen Zeppelinstrasse 5
D-3000 Hannover(DE)

(54) Verfahren zur Herstellung geformter Kunststoffelemente.

(57) Die Erfindung betrifft ein Tiefziehverfahren zur Herstellung geformter Kunstsoffelemente wie ausschäumbarer Kraftfahrzeug-Verkleidungen aus einer tiefziehbaren thermoplastischen Kunststoffolie, bei dem die von einem Spannrahmen gehaltene Folie bis auf die Warmformtemperatur erwärmt und in einer dem Formwerkzeug entsprechenden allgemeinen Kontur vorformend gewölbt wird, worauf das Formwerkzeug in die Wölbung der vorgeformten Folie eingefahren und diese durch Erzeugung eines Druckunterschiedes zwischen Folie und Oberfläche des Formwerkzeuges an diesem endverformt und nach Abkühlung von diesem abgenommen wird, wobei man vor dem Endverformen einen Dickenbereich der Folie an deren Rückseite durch Erhitzen mittels hoher Strahlungsintensität in den plastischen Temperaturbereich des Kunststoffes bringt.

EP 0 192 837 A2

Fig.2

Die Erfindung betrifft ein Verfahren zur Herstellung geformter Kunststoffelemente gemäß Oberbegriff des Hauptanspruches.

Die bekannten Verfahren zur Vakuumverformung, die auch als Positiv-Verfahren bezeichnet werden, beruhen darauf, daß ein konvex ausgebildetes Formwerkzeug mit glatten Außenwänden gegen eine von einem Spannrahmen gehaltene Folienbahn bewegt wird, die auf eine Bereitstellungstemperatur gebracht worden ist und durch einen Überdruck vorformend aufgewölbt ist. Bei Kontakt des Formwerkzeuges mit der auf Tiefziehtemperatur gebrachten Folie wird diese in erwärmtem Zustand in die gewünschte Form gezogen und nach Abkühlung entnommen. Bei diesen Verfahren liegt die Dekorseite der Folie außen, so daß diese nicht dem Verformungsdruck ausgesetzt ist und die vorgegebene Prägung der Folienbahn beibehält.

Diese Positiv-Verfahren haben den Vorteil, daß Folien eingesetzt werden können, die auf ihrer Dekorseite oder Vorderseite bereits mit einer ansprechenden Oberflächengestaltung, beispielsweise einer sogenannten Leder-echt-Prägung versehen sind, die bei dem späteren Tiefziehen keinem Verformungsdruck ausgesetzt sind.

Ein derartiges Verfahren - jedoch ohne vorherige Aufwölbung - ist beispielsweise in der DE-PS 25 08 982 beschrieben, wobei bei diesem Verfahren Wert darauf gelegt wird, daß die Bereitstellungstemperatur möglichst dicht unterhalb der Tiefziehtemperatur liegt, aber noch niedrig genug ist, damit die an den Seitenkanten gehaltene Folie zäh genug ist, um ihr Eigengewicht über längere Zeiträume ohne zu fließen halten zu können, wobei die Tiefziehtemperatur je nach Art und Dicke der Folie im Bereich von über 140$^{\circ}$C, aber nicht höher als 170$^{\circ}$C liegt.

Weitere derartige Positiv-Verfahren sind einschließlich der hierfür geeigneten Vorrichtungen ausführlich in "Modern Plastics Encyclopedia" 1969-1970, Seiten 534-563 und in der DE-OS 3 103 584 beschrieben, jedoch wird bei diesen Verfahren die Folie selbst in extremen Fällen nicht über 160°C erwärmt, und der Einfluß der Verfahrensbedingungen hinsichtlich einer etwaigen Beeinträchtigung der Dekorseite der folie findet keine Erwähnung.

Der Nachteil dieser Positiv-Verfahren besteht darin, daß die Tiefziehfolien im elastisch-platischen Übergangsbereich bei etwa 140 - 170°C verformt werden. Kunststoffmoleküle, welche in diesem Bereich verstreckt werden, haben nach Wiedererwärmung das Bestreben, ihre ursprüngliche Wirrlage wieder einzunehmen, wobei sie, wenn sie daran gehindert werden, erhebliche Schrumpfkräfte entwickeln. Ein beispielsweise nach diesem Verfahren hergestelltes hinterschäumtes Armaturenbrett wird durch Sonneneinwirkung insbesonders in heißen Klimazonen stark deformiert. Eine fest aufkaschierte Tiefziehfolie reißt sogar auf, da die Schrumpfspannungen die Bruchspannung des Kunststoffes übersteigen.

Neben dem Positiv-Verfahren wird häufig auch das Negativverfahren angewandt. Bei diesem Verfahren wird die Folie mittels Vakkum in eine konkave Form gesaugt. Da die Verformungstemperaturen ebenfalls im elastisch-plastischen Übergangsbereich liegen, treten hierbei die gleichen Nachteile auf wie beim Positiv-Verfahren.

Zur Behebung dieser Nachteile hat man das sogenannte Slush-Molding Verfahren vorgeschlagen, bei dem ein konkaves Formwerkzeug mit gravierter Innenfläche mit pastöser Kunststoffmasse ausgespritzt wird, die bei relativ hohen Temperaturen des Formwerkzeuges ausgeliert wird; dieses Verfahren ist jedoch wegen der hohen Formentemperatur, der

0192837

langen Taktzeiten, des monotonen Oberflächenbildes und wegen der hohen Formkosten unwirtschaftlich.

Die vorliegende Erfindung hat sich die Aufgabe gestellt, das eingangs geschilderte Positiv-Verfahren dahingehend zu verbessern, daß die Verformung der Tiefziehfolie zu einem entscheidenden Anteil der Dicke im plastischen rückstellfreien Temperaturbereich erfolgt und damit der Gebrauch von z.B. Armaturenbrettern eines Kraftfahrzeuges auch unter extremen klimatischen Bedingungen ermöglicht wird.

Zur Lösung dieser Aufgabe wird ausgehend von dem eingangs erwähnten Positiv-Verfahren erfindungsgemäß in der Weise verfahren, daß vor dem Endverformen ein Dickenbereich der Folie an deren Rückseite mittels hoher Strahlungsintensität in den plastischen Temperaturbereich des Kunststoffes erhitzt wird.

Weitere vorteilhafte Verfahrensmaßnahmen ergeben sich aus den Unteransprüchen.

In Anbetracht dessen, daß die geprägte Dekorseite der Tiefziehfolien wegen der thermisch empfindlichen Narbstruktur nicht über 170°C erhitzt werden darf, und der plastische rückstellfreie Temperaturbereich erst bei 180°C beginnt, wir die Folienrückseite so hoch wie möglich erhitzt, um einen möglichst großen Dickenbereich der Folien in den plastischen Zustand zu bringen. Die Grenze der thermischen Belastbarkeit der Folienrückseite liegt bei einer Temperatur von 240°C; sie wird nur für wenige Sekunden ohne Schädigung des Kunststoffes ertragen.

Im plastischen Zustand haben die Folien eine nur geringe Festigkeit. Um einen Durchhang der Folie während des Aufheizprozesses zu vermeiden, wird die im Rahmen eingespannte Folie von unten mit Stützluft beaufschlagt.

Die Stützluft hat außerdem die Funktion, die geprägte Dekorseite der Folie auf kleiner als 170°C zu kühlen, wodurch auch an der Dekorseite ein steiler Temperaturverlauf erzeugt wird, und damit insgesamt ein noch größerer Anteil des Foliendickenbereiches in den plastischen Zustand erhitzt wird.

Für das Verfahren ist des weiteren von ausschlaggebender Bedeutung, daß die Endverformung in möglichst kurzer Zeit von weniger als 5 Sekunden erfolgt. Bei längeren Verformungszeiten ist der Temperaturausgleich zwischen Dekor- und Rückseite der Folie bereits so groß, daß die Narbstruktur der Dekorseite beeinträchtigt wird.

Im folgenden wird die Erfindung anhand von Zeichnungen erläutert:

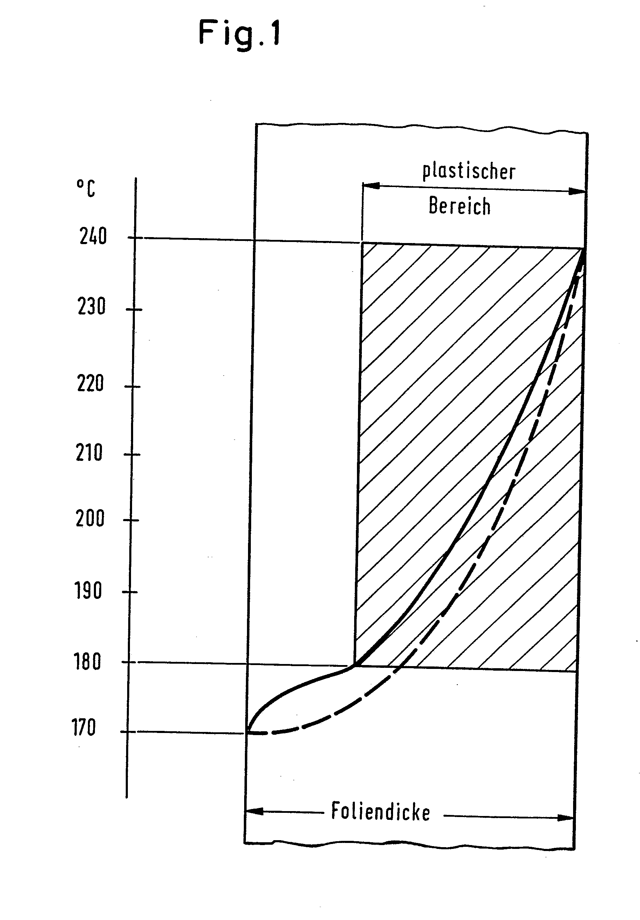

Figur 1    zeigt den Temperaturverlauf über die Foliendicke aufgetragen nach Beendigung des Aufheizprozesses unter Einwirkung der kühlenden Stützluft- ausgezogene Linie - und ohne Stützluft - gestrichelte Linie.

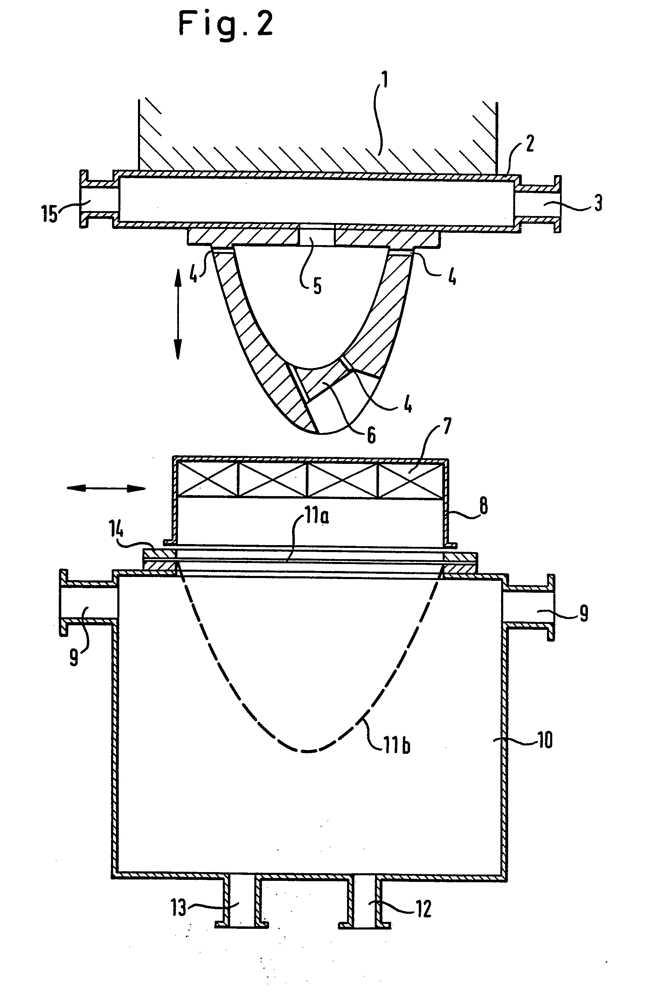

Figur 2    stellt eine prinzipielle Vorrichtung zur Durchführung des Verfahrens dar.

Das Formwerkzeug 6 mit den Saugöffnungen 4 und 5 ist an der Vakuumkammer 2 befestigt, die ihrerseits mit dem Stempel 1 fest verbunden ist, der über einen hier nicht dargestellten Hydraulikzylinder vertikal bewegt wird. Die Strahlungsheizung 7 mit seitlicher Abschirmung 8 ist horizontal verfahrbar angeordnet. Die Folie 11 ist in einem Spannrahmen 14 allseitig eingespannt, der sich oberhalb des Verformungskastens 10 mit den Anschlüssen 9 und 12 für die Stützluft und dem Anschluß 13 für das Vakuum befindet.

Zum Erhitzen der Folie 11a wird die Strahlungsheizung 7 in die Tiefziehvorrichtung eingefahren und gleichzeitig Stützluft durch die Anschlüsse 9 in den Verformungskasten 10 geblasen. Die Stützluft strömt über die Öffnung 12 ins Freie. Die Geschwindigkeit der abströmenden Luft ist ein Maß für den sich im Verformungskasten 10 einstellenden Überdruck, der die Folie 11a während des Aufheizprozesses trägt.

Nach Erreichen der gewünschten Verformungstemperatur werden die Anschlüsse 9 und 12 über hier nicht dargestellte Ventile geschlossen und gleichzeitig an Anschluß 13 Vakuum angelegt. Hierdurch wird die Folie vorverformt und nimmt etwa die Lage 11b ein. Erst dann fährt die Strahlungsheizung 7 in die Warteposition außerhalb der Tiefziehvorrichtung, und der Stempel 1 fährt mit dem Formwerkzeug 6 schlagartig in den Verformungskasten 10 ein. In diesem Augenblick wird an das Formwerkzeug 6 über Anschluß 15 Hochvakuum angelegt, wobei der Anschluß 3 geschlossen bleibt. Gleichzeitig wird Anschluß 13 geschlossen und Anschluß 12 geöffnet, damit sich im Verformungskasten 10 der Umgebungsluftdruck einstellt, der die Folie konturengetreu an das Formwerkzeug 6 andrückt.

Nach einer Abkühlzeit von ca. 30 bis 60 Sekunden wird Anschluß 15 geschlossen und Anschluß 3 geöffnet, so daß sich im Formwerkzeug 6 wieder der Umgebungsluftdruck einstellt. Nach Hochfahren des Stempels 1 wird dem Spannrahmen 14 die fertig verformte Tiefziehfolie entnommen.

## Patentansprüche

1. Verfahren zum Herstellen eines geformten Kunststoffelementes, insbesondere einer ausschäumbaren Kraftfahrzeugverkleidung, aus einer Folie aus tiefziehbarem
thermoplastischen Kunststoff, bei dem die von einem
Spannrahmen gehaltene Folie bis auf die Warmformtemperatur des Kunststoffes erwärmt und entsprechend der
allgemeinen Kontur eines Formwerkzeuges vorformend
gewölbt wird, worauf die Folie nach Einfahren des
Formwerkzeuges in die Wölbung durch Anlegen der Rückseite
der Folie an die Oberfläche des Formwerkzeuges mittels
eines Druckunterschiedes endverformt und nach Abkühlung
von diesem abgenommen wird, dadurch gekennzeichnet, daß
vor dem Endverformen ein Dickenbereich der Folie an deren
Rückseite mittels hoher Strahlungsintensität in den
plastischen Temperaturbereich des Kunststoffes erhitzt
wird.

2. Verfahren nach Anspruch 1, dadurch gekennzeichnet, daß
die Dicke des Dickenbereiches mindestens 30 % der
Foliendicke beträgt.

3. Verfahren nach einem der Ansprüche 1 oder 2 bei
Verwendung von Polyvinylchlorid für die Folie dadurch
gekennzeichnet, daß die dekorierte Vorderseite der Folie
während des Erhitzens der Rückseite mittels Stützluft auf
weniger als 170$^{\circ}$C gekühlt wird.

4. Verfahren nach Anspruch 1 bei Verwendung von Polyvinylchlorid für die Folie, dadurch gekennzeichnet, daß das
Erhitzen der Folienrückseite auf bis zu 240$^{\circ}$C während, in
Abhängigkeit von der Foliendicke, 5 bis 45 Sekunden
erfolgt.

5. Verfahren nach den Ansprüchen 1 bis 4, dadurch gekennzeichnet, daß die Endverformung zur Aufrechterhaltung der
Temperaturdifferenz zwischen Vorder- und Rückseite der
Folie in weniger als 5 Sekunden erfolgt.

# Fig.1

0192837

# Fig.2